Europäisches Patentamt

European Patent Office

Office européen des brevets

(19)

(11) Numéro de publication: **0 270 456**
**B1**

(12) **FASCICULE DE BREVET EUROPEEN**

(45) Date de publication du fascicule du brevet: **30.01.91**

(21) Numéro de dépôt: **87402702.2**

(22) Date de dépôt: **30.11.87**

(51) Int. Cl.⁵: **B 60 G 15/00,** B 60 K 5/12,
F 16 F 13/00

(54) Dispositif de suspension de la caisse et du groupe motopropulseur d'un véhicule automobile.

(30) Priorité: **04.12.86 FR 8617001**

(43) Date de publication de la demande:
**08.06.88 Bulletin 88/23**

(45) Mention de la délivrance du brevet:
**30.01.91 Bulletin 91/05**

(84) Etats contractants désignés:
**DE ES GB IT SE**

(56) Documents cités:
**EP-A-0 126 006**
**EP-A-0 178 934**
**DE-A-3 245 653**
**DE-A-3 509 000**
**FR-A-2 272 857**
**FR-A-2 467 724**
**FR-A-2 542 405**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **Le Salver, Robert**
**Rue des Coteaux Chanteloup les Vignes**
**F-78570 Andresy (FR)**
Inventeur: **Poupard, Dominique**
**6, rue du Lac**
**F-92370 Chaville (FR)**

(74) Mandataire: **Bouget, Lucien et al**
**Cabinet Lavoix 2, Place d'Estienne d'Orves**
**F-75441 Paris Cédex 09 (FR)**

Courier Press, Leamington Spa, England.

## Description

L'invention concerne un dispositif de suspension de la caisse et du groupe motopropulseur d'un véhicule automobile qui comporte, associé à chaque roue, un amortisseur télescopique relié d'une part à la caisse et d'autre part à la roue.

On connaît, par le brevet FR—A—2.272.857, un dispositif de suspension qui comporte, pour chacune des roues, une chambre à volume variable intercalée entre la caisse et la partie adjacente de l'amortisseur, remplie d'un liquide incompressible et reliée hydrauliquement à une seconde chambre à volume variable disposée entre la caisse et le groupe motopropulseur. Cette seconde chambre est généralement ménagée à l'intérieur d'un support élastique intercalé entre le groupe motopropulseur et la caisse et constitue une chambre de travail dont les parois déformables subissent des forces extérieures qui correspondent aux forces mises en jeu entre le moteur et la caisse.

Dans ce dispositif connu, le rapport des efforts transmis par les roues, d'une part au châssis et à la caisse et d'autre part au moteur du véhicule est sensiblement indépendant de la fréquence des sollicitations, dans l'intervalle compris entre 0 et 1,5 FO, FO étant la fréquence propre verticale du moteur par rapport à la caisse.

Dans la suspension selon le brevet précité, la liaison hydraulique entre la première et la seconde chambres est assurée par un conduit rempli de liquide incompressible. Pour faire varier le rapport des efforts transmis au châssis et au moteur en fonction de la fréquence, on ne dispose que d'un seul moyen qui consiste à utiliser un conduit de liaison entre les deux chambres dont le rapport de la section à la longueur est suffisamment petit. Cette possibilité de réglage des efforts transmis en fonction de la fréquence qui est limitée à une gamme de fréquence se trouvant au voisinage de la limite supérieure de l'intervalle d'utilisation de la suspension n'a donc pas un très grand intérêt pratique.

Dans le cas où plusieurs modes vibratoires entre le moteur et la caisse sont excités par la route, il est très difficile d'obtenir une conception et un réglage de la suspension satisfaisant.

En outre, le dispositif selon le brevet français 2.272.857 n'assure pas l'amortissement des mouvements du moteur par rapport à la caisse. De tels mouvement verticaux peuvent se produire, en particulier lorsque la répartition idéale des efforts est contrariée par la mise en butée des limiteurs de débattement associés aux éléments élastiques liant les amortisseurs de roue à la caisse.

On connaît également par le brevet FR—A—2.467.724 une cale élastique utilisée notamment pour la suspension d'un moteur de véhicule automobile qui comporte deux chambres remplies de liquide, délimitées par des parois élastiques subissant les forces extérieures mises en jeu entre le moteur et la caisse du véhicule et reliées entre elles par un conduit de grande longueur assurant un certain amortissement des mouvements du moteur par rapport à la caisse. Un tel dispositif qui est conçu tout-à-fait indépendamment de la suspension de la caisse par rapport aux roues du véhicule n'apporte pas de solution en ce qui concerne la répartition des efforts transmis par les roues entre la caisse et le moteur.

Le but de l'invention est donc de proposer un dispositif de suspension de la caisse et du groupe motopropulseur d'un véhicule automobile comportant, associé à chaque roue un amortisseur télescopique relié d'une part à la caisse et d'autre part à la roue et une première chambre à volume variable intercalée entre la caisse et la partie adjacente de l'amortisseur, remplie d'un liquide incompressible et reliée hydrauliquement par un premier conduit de longueur L1 et de section S1 et en deuxième conduit de longueur L2 et de section S2 à une seconde chambre à volume variable ménagée dans un support élastique intercalé entre le groupe motopropulseur et la caisse de façon à constituer une chambre de travail dont la paroi déformable subit des forces extérieures, ce dispositif de suspension permettant d'assurer, sur toute la plage d'utilisation de la suspension en fréquence, une répartition idéale des efforts transmis par les roues à la caisse et au moteur et un amortissement des mouvements du moteur par rapport à la caisse, lors de la mise en butée des amortisseurs de roues, le confort des passagers du véhicule étant ainsi considérablement accru.

Dans ce but, la première et la seconde chambres sont reliées à une troisième chambre à volume variable constituant une simple chambre d'expansion dont la paroi déformable ne subit pas de forces extérieures, par l'intermédiaire d'un troisième conduit de longueur L3 et de section S3 qui a un point de jonction P commun avec les premier et deuxième conduits et que deux au moins des trois conduits ont une longueur non nulle et que les deuxième et troisième conduits constituent un canal de longueur L2+L3 importante par rapport au diamètre de sa section.

Afin de bien faire comprendre l'invention, on va maintenant décrire, à titre d'exemples non limitatifs, en se référant aux figures jointes en annexe, la structure générale et deux modes de réalisation particuliers d'un dispositif de suspension suivant l'invention.

La figure 1 est un schéma de principe montrant la structure générale du dispositif suivant l'invention.

La figure 2 est une vue en élévation avec coupe partielle d'un dispositif de suspension suivant l'invention et suivant un premier mode de réalisation associé à une roue d'un véhicule automobile.

La figure 3 est une vue en coupe agrandie du support élastique de la suspension représentée à la figure 2, intercalé entre le moteur et la caisse.

La figure 4 est une vue suivant 4—4 de la figure 3.

La figure 5 est une vue en élévation avec coupe partielle d'un dispositif de suspension suivant l'invention et suivant un second mode de réalisation, associé à une roue d'un véhicule automobile.

La figure 6 est une vue en coupe agrandie du support élastique du dispositif de suspension représenté à la figure 5, intercalé entre le moteur et la caisse.

La figure 7 est une vue suivant 7—7 de la figure 6.

La figure 8 est un diagramme représentant les variations de l'effort transmis au moteur en fonction de la fréquencé des sollicitations, dans le cas de dispositifs de suspension suivant l'invention présentant des caractéristiques différentes.

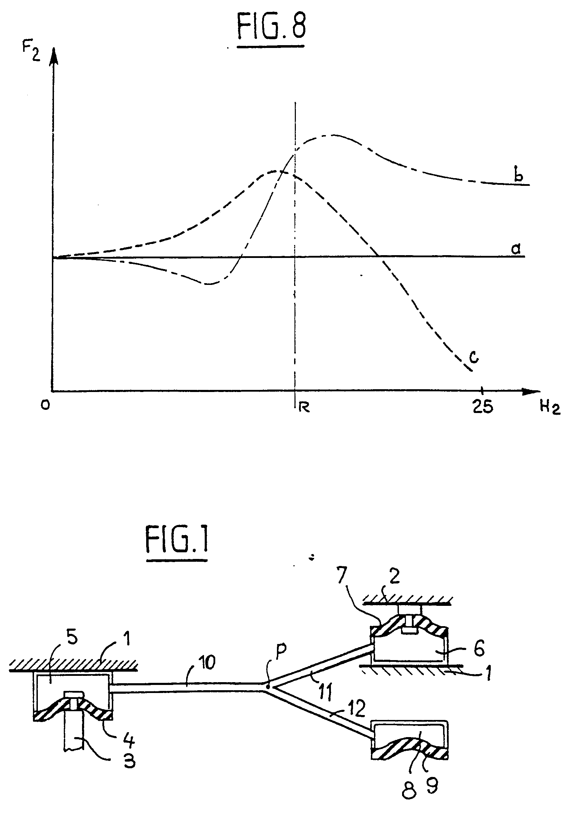

Sur la figure 1, on a représenté de façon schématique la partie associée à une roue du véhicule non représentée, d'un dispositif de suspension suivant l'invention assurant la suspension de la caisse 1 et du groupe motopropulseur 2 du véhicule.

Le dispositif de suspension comporte un amortisseur télescopique dont le corps non représenté est relié à la roue du véhicule et dont la tige 3 est reliée à la paroi déformable 4 d'une chambre à volume variable 5 remplie de fluide incompressible et intercalée entre la caisse 1 du véhicule et l'amortisseur.

Une seconde chambre à volume variable 6 intercalée entre la caisse 1 et le groupe motopropulseur 2, également remplie de fluide incompressible, comporte une paroi déformable 7 reliée au moteur 2.

Une troisième chambre 8 à volume variable remplie de fluide incompressible et comportant une paroi déformable 9 est fixée sur le véhicule, soit par l'intermédiaire d'un dispositif de support élastique du moteur incorporant la seconde chambre 6, soit indépendamment. La chambre 8 est une simple chambre d'expansion dont la paroi déformable ne subit pas de forces extérieures contrairement aux parois déformables des chambres 5 et 6 qui sont soumises aux forces mises en jeu entre la tige d'amortisseur et la caisse et entre le moteur et la caisse, respectivement.

Les chambres 5, 6 et 8 sont reliées entre elles par des conduits 10, 11 et 12 remplis de fluide incompressible. Le conduit 10 de longueur l1 et de section s1 comporte un point de jonction P commun avec le conduit 11 de longueur l2 et de section s2 et avec le conduit 12 de longueur l3 et de section s3, l'ensemble des conduits 10, 11 et 12 constituant un élément de jonction en Y entre les chambres 5, 6 et 8 auxquelles sont reliés les conduits 10, 11 et 12.

La chambre de travail 6 est reliée à la chambre d'expansion 8 par les conduits 11 et 12 disposés l'un à la suite de l'autre. Ces deux conduits 11 et 12 constituent un canal de grande longueur par rapport à son diamètre, la longueur l2+l3 étant par exemple de 10 à 100 fois plus grande que le diamètre des sections s2 et s3 qui sont soit égales soit peu différentes. La première chambre de travail 5 est reliée à la seconde chambre par le conduit 10 et le conduit 11 constituant une partie du canal de grande longueur. Cette première chambre 5 est reliée à la chambre d'expansion 8 par le conduit commun 10 et par le conduit 12 constituant une partie du canal de grande longueur.

On pourra noter, que pour la mise en oeuvre de l'invention, la longueur de l'un quelconque des conduits 10, 11 et 12 peut être nulle mais que deux au moins de ces conduits ont une longueur non nulle. Lorsqu'un des conduits à une longueur nulle, le point de jonction P se trouve au niveau de l'une des chambres 5, 6 et 8, suivant que le conduit de longueur nulle est le conduit 10, 11 ou 12, respectivement.

On va maintenant décrire, de façon générale, le fonctionnement d'un dispositif de suspension tel que représenté sur la figure 1.

Toute impulsion provenant d'une irrégularité de la route et transmise pour la roue et la tige de l'amortisseur correspondant se traduit par une variation de volume V1 dans la chambre 5 et simultanément, par l'apparition d'un effort F1 transmis à la caisse 1 du véhicule. Cette variation de volume provoque des variations de volume pratiquement simultanées V2 et V3 dans les chambres 6 et 8, ces variations étant telles que: $V1=-(V2+V3)$, les conduits 10, 11 et 12 étant supposés indéformables. La variation de volume V2 dans la chambre de travail 6 s'accompagne d'une force F2 transmise au moteur 2. L'objectif recherché est d'avoir un rapport F1/F2 qui donne, sur toute la plage de fréquences correspondant à l'utilisation du véhicule sur route, cette plage de fréquences étant comprise entre 0 et 25 Hertz, le plus faible niveau vibratoire possible de la caisse du véhicule, afin d'obtenir le meilleur confort possible pour les passagers.

Cet objectif peut être atteint en utilisant un dispositif de suspension tel que représenté sur la figure 1, en choisissant de façon adéquate la position du point de jonction P sur le trajet de la colonne de liquide reliant hydrauliquement les chambres 6 et 8, à l'intérieur du canal de grande longueur 11, 12.

Dans le mode vibratoire de la colonne de liquide oscillant entre les chambres 6 et 8, il existe un point, situé entre les deux extrémités de la colonne, où la pression vibratoire est nulle. Ce point est au milieu de la colonne si les parois déformables délimitant les chambres 6 et 8 ont les mêmes caractéristiques de raideur.

Si le point de jonction P est confondu avec le point où la pression vibratoire est nulle dans la colonne de liquide joignant les chambres 6 et 8, les impulsions de pression provenant des irrégularités de la route et transmises par les roues n'excitent pas le mode vibratoire de la colonne de liquide entre les chambres 6 et 8 si bien que l'effort F2 transmis au moteur ne varie pas en fonction de la fréquence. On a représenté sur la figure 8 la courbe a correspondante qui est, dans ce cas, une droite parallèle à l'axe des fréquences.

Sur la figure 8, on a porté, dans l'intervalle de fréquences 0 à 25 Hz constituant la plage d'utilisation de la suspension, la fréquence de résonance R de la colonne de liquide joignant les chambres 6 et 8, à l'intérieur du canal de grande longueur.

Cette fréquence R correspond au maximum d'amortissement des mouvements du moteur par rapport à la caisse.

Si le point de jonction P est situé du côté de la chambre d'expansion 8, par rapport au point de pression nulle dans la colonne de liquide à l'intérieur du canal de grande longueur, la colonne de liquide réalise un écran pour les fréquences supérieures à la fréquence R de résonance de la colonne. Il en résulte une diminution de l'effort F2 après la résonance. La variation correspondante de l'effort F2 transmis au moteur est représentée par la courbe c sur la figure 8.

Enfin, si le point P est situé du côté de la chambre de travail 6, par rapport au point de pression nulle dans la colonne de liquide, l'effort F2 est réduit en-dessous de la fréquence de résonance R et augmenté au-dessus. La variation correspondante de l'effort F2 est représenté par la courbe b de la figure 8.

On dispose donc ainsi d'une possibilité de réglage des variations de l'effort transmis au moteur F2 en fonction de la fréquence.

En outre, lorsque le niveau de l'impulsion provenant de la route est très élevé, la mise en appui des butées de limitation de déplacement de l'amortisseur, au niveau de la chambre 5, provoque une augmentation du rapport F1/F2 par rapport à l'objectif recherché. Dans ce cas, tout mouvement relatif du moteur par rapport à la caisse du véhicule provoque un écoulement de liquide entre les chambres 6 et 8, puisque la chambre 5 est pratiquement bloquée par les limiteurs de déplacement. Les mouvements du moteur par rapport à la caisse sont alors amortis grâce aux forces d'amortissement produites par l'écoulement de la colonne de liquide dans le canal de grande longueur.

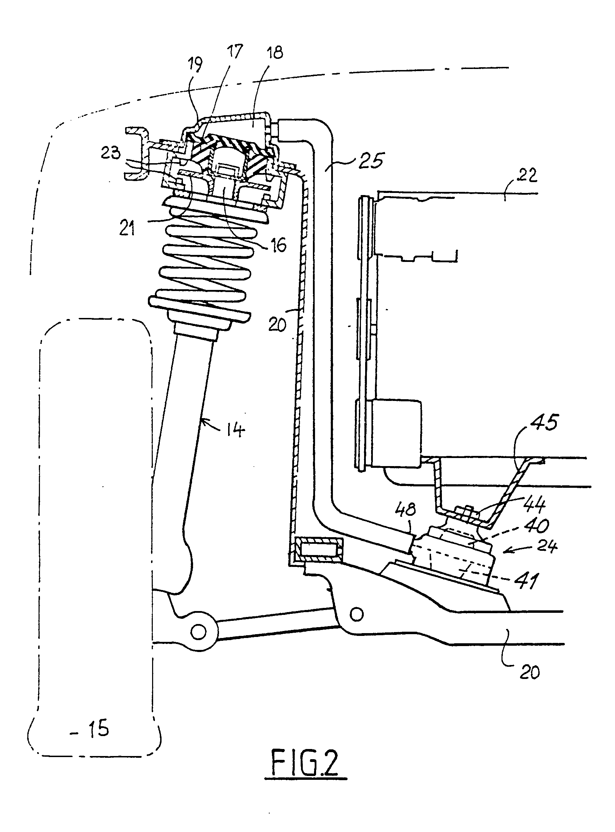

Sur les figures 2, 3 et 4, on voit un premier mode de réalisation du dispositif de suspension suivant l'invention qui comporte un amortisseur télescopique 14 dont le corps est relié à la roue 15 du véhicule et la tige 16 à une paroi élastique 17 constituant la paroi inférieure déformable d'une chambre 18 comportant une paroi rigide 19 fixée sur la caisse 20 du véhicule. La chambre 18 remplie de liquide est ainsi intercalée entre la caisse 20 du véhicule et l'extrémité de la tige 16 de l'amortisseur télescopique. Cette extrémité de la tige 16 est solidaire d'une collerette 21 susceptible de se déplacer avec la tige de l'amortisseur, entre des butées de limitation de déplacement 23 solidaires de la caisse 20.

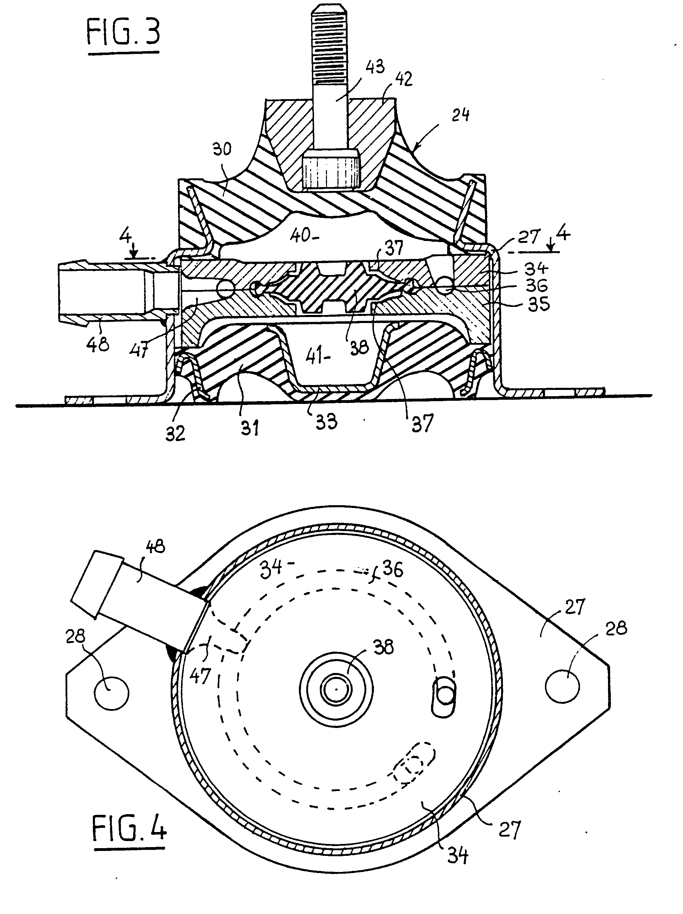

Un support élastique 24 qui sera décrit plus en détail en se référant aux figures 3 et 4 est d'autre part intercalé entre le groupe motopropulseur 22 du véhicule et le châssis solidaire de la caisse 20. Un conduit de liaison hydraulique 25 permet de relier la chambre 18 intercalée entre l'amortisseur et la caisse aux chambres du support élastique 24, de la manière qui sera décrite en se référant aux figures 3 et 4.

Comme il est visible sur ces figures, le support élastique 24 comporte une armature métallique 27 percée de trous 28 permettant sa fixation sur la caisse 20 du véhicule et une paroi élastique 30 en élastomère rendue solidaire par adhérence de la partie supérieure de l'armature 27, à sa partie périphérique. Une seconde paroi 31 en élastomère renforcée par des armatures métalliques 32 et 33 est fixée à sa périphérie à la partie inférieure de l'armature 27 du support élastique. Entre les parois élastiques 30 et 31, deux disques rigides circulaires 34 et 35 sont montés serrés l'un contre l'autre et maintenus dans cette position après montage, grâce à la rigidité des armatures.

Les disques 34 et 35 sont conformés sur leurs faces en regard pour constituer, par leur juxtaposition, un canal 36 de grande longueur par rapport à sa section, de forme circulaire et débouchant à l'une de ses extrémités sur la face supérieure du disque supérieur 34 et à son autre extrémité sur la face inférieure du disque inférieur 35. Les deux disques 34 et 35 sont également conformés pour constituer les sièges d'appui 37 pour une paroi mobile 38 en élastomère intercalée entre les disques 34 et 35 à leur partie centrale.

Cette disposition est conforme à ce qui est décrit dans le brevet FR—A—2.467.724 qui est relatif à un support élastique assurant à la fois un bon filtrage des vibrations à haute fréquence et faible amplitude émises par un moteur de véhicule et un bon amortissement des vibrations à basse fréquence et forte amplitude entre le moteur et la caisse du véhicule. La paroi mobile et déformable 38 placée entre les deux disques 34 et 35 et permettant le filtrage des vibrations à faible amplitude et forte fréquence n'est cependant pas indispensable pour la réalisation de la présente invention.

La paroi constituée par les deux disques 34 et 35 complétée par la paroi mobile centrale 38 permet de délimiter une chambre 40 entre la paroi déformable 30 et la surface supérieure de la paroi de séparation et une seconde chambre 41 entre la paroi déformable inférieure 31 et la surface inférieure de la paroi de séparation. La paroi supérieure déformable 30 du support élastique est solidaire d'une pièce de raccordement 42 dans laquelle est fixée une vis 43 qui peut être engagée dans un trou ménagé dans une patte 45 solidaire du groupe motopropulseur 22 du moteur, comme il est visible sur la figure 2.

La fixation du support élastique sur le moteur est assurée par un écrou 44 coopérant avec la vis 43. La paroi déformable 30 supporte des forces extérieures qui correspondent aux forces mises en jeu entre le groupe motopropulseur 22 et la caisse 20 du véhicule. La chambre 40 délimitée par cette paroi 30 au-dessus du disque 34 constitue donc une chambre de travail.

En revanche, la paroi 31 qui n'est reliée qu'à l'armature 27 ne subit aucune force extérieure et constitue une simple chambre d'expansion. Les deux chambres 40 et 41 sont reliées par le canal 36 de grande longueur qui débouche sur les faces des disques 34 et 35 délimitant les chambres 40 et 41 respectivement.

Les disques 34 et 35 sont également conformés pour constituer par leur juxtaposition un passage 47 de direction radiale joignant le canal 36 à une zone périphérique des disques 34 et 35 présentant un petit dégagement dans la direction radiale, entre deux génératrices, pour l'engagement d'un embout 48 qui est mis ainsi en communication avec le passage 47 et le canal 36. L'embout 48 est soudé sur l'armature métallique 27 du support élastique et reçoit l'extrémité du conduit 25, assurant la liaison hydraulique entre la chambre 18 située à l'extrémité de l'amortisseur 14 et les conduits communiquant avec les chambres 40 et 41 du support élastique 24. De plus, l'embout 48 introduit dans le dégagement radial usiné à la périphérie des disques 34 et 35 permet de fixer ces disques en position angulaire l'un par rapport à l'autre.

L'ensemble constitué par les chambres 18, 40 et 41 et les conduits de liaison entre ces chambres 25, 47, 36 est rempli d'un liquide incompressible et fonctionne de la même façon que le dispositif de suspension représenté de façon schématique sur la figure 1 et décrit plus haut. Les chambres 18, 40 et 41 du dispositif représenté sur les figures 2, 3 et 4 sont équivalents aux chambres 5, 6 et 8 du dispositif représenté sur la figure 1, respectivement. Le conduit 25 et le passage 47 situé dans le prolongement de ce conduit correspondent au conduit 10, le point d'intersection du passage 47 et du canal de grande longueur 36 correspondant au point de raccordement P. Les deux portions du canal 36 situées de part et d'autre du passage 47 et débouchant dans les chambres 40 et 41 respectivement sont analogues aux conduits 11 et 12 du dispositif représenté sur la figure 1.

Dans le mode de réalisation décrit et représenté, le passage 47 de liaison entre le canal 36 et le conduit 25 est dans une position située à égale distance des extrémités du canal 36 débouchant dans les chambres 40 et 41 respectivement. Dans le cas où les parois déformables 30 et 31 présentent la même raideur, le point de pression nulle dans la colonne de liquide remplissant le canal 36 correspondant au point d'intersection entre le passage 47 et le canal 36. L'effort transmis au moteur dans le cas d'une impulsion provenant d'une irrégularité de la route ne dépend pas de la fréquence et peut être représenté par la courbe a de la figure 8. Le dispositif présente alors l'avantage d'amortir les mouvements du moteur par rapport à la caisse du véhicule, lorsque la tige de l'amortisseur et la paroi déformable 17 de la chambre 18 sont bloquées par les butées 23.

Pour obtenir une variation de l'effort transmis au moteur, en fonction de la fréquence, qui soit du type représenté par les courbes b ou c de la figure 8, il suffit de prévoir un passage de communication 47 entre le conduit 25 et le canal 36 placé dans une position qui soit plus proche d'une des extrémités ou de l'autre du canal 36.

Dans le cas où les parois déformables 30 et 31 des chambres 40 et 41 respectivement ne possèdent pas une raideur identique, on peut obtenir une caractéristique effort transmis-fréquence du type b ou du type c avec une disposition telle que représentée sur la figure 4, où le passage 47 débouche à la partie médiane du canal 36.

D'autre part, le niveau des efforts transmis au moteur dépend de la raideur des parois déformables des chambres.

On dispose donc, dans tous les cas, des moyens nécessaires pour régler l'effort transmis au moteur et sa variation en fonction de la fréquence, pour limiter le niveau de vibrations du véhicule, dans tout l'intervalle de fréquences d'utilisation.

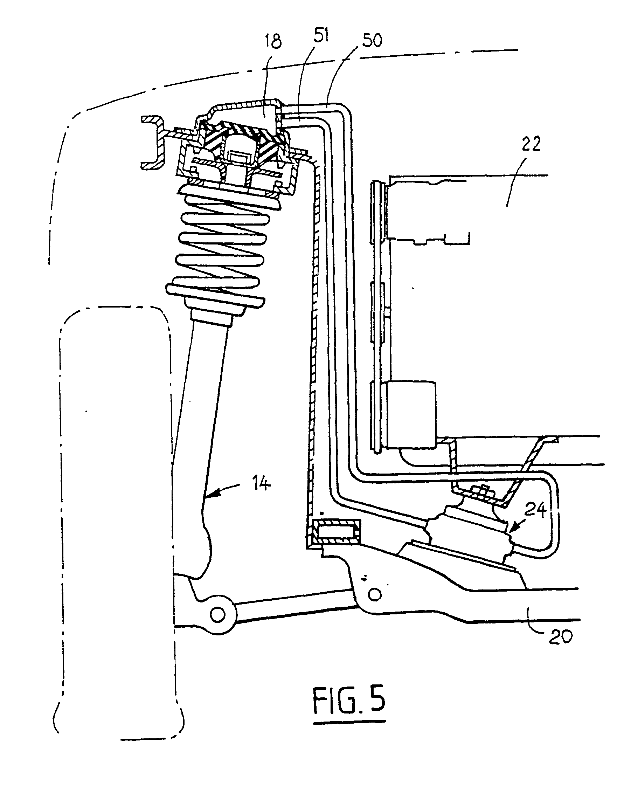

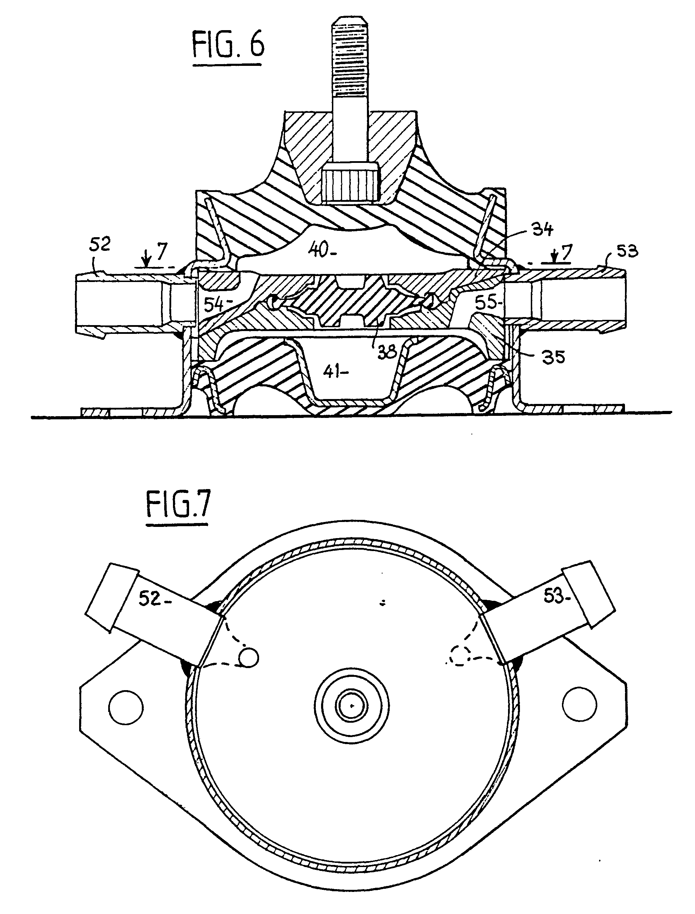

Sur les figures 5, 6 et 7, on a représenté un second mode de réalisation du dispositif de suspension suivant l'invention. Les éléments correspondants sur les figures 5, 6 et 7 d'une part et 2, 3 et 4 d'autre part portent les mêmes repères.

Comme il est visible sur la figure 5, la chambre 18 située au-dessus de l'amortisseur 14 est reliée au support élastique 24 intercalé entre le moteur 22 et la caisse 20 par deux conduits 50 et 51.

Le conduit 50 est relié au support élastique 24 par l'intermédiaire d'un embout 52 et le conduit 51, par l'intermédiaire d'un embout 53.

On voit que les deux disques 34 et 35 constituant avec la paroi mobile 38 une paroi de séparation entre les chambres 40 et 41 sont percés de passages 54 et 55 débouchant dans les chambres 40 et 41 respectivement. L'embout 52 est fixé sur l'armature 27 et le disque 34 est positionné angulairement par rapport à l'armature 27 de façon que le passage 54 soit dans le prolongement de l'embout 52. La chambre 40 est ainsi mise en communication avec la chambre 18, par l'intermédiaire du conduit 50.

De la même façon, l'embout 53 et le passage 55 sont mis en communication l'un avec l'autre et la chambre 41 est mise en communication avec la chambre 18, par l'intermédiaire du conduit 51.

Par comparaison avec le dispositif décrit de façon générale en se référant à la figure 1, on voit que dans ce mode de réalisation, le conduit 10 a une longueur nulle, le point de raccordement P étant situé au niveau de la chambre 18 et le canal de grande longueur joignant les chambres 40 et 41 étant constitué par l'ensemble des conduits 50 et 51 extérieurs au support élastique 24.

Les chambres 18, 40 et 41 et les conduits 50 et 51 sont remplis de fluide incompressible et le fonctionnement du dispositif de suspension dépend de la position du point de pression dynamique nulle dans le canal de liaison entre les chambres 40 et 41, par rapport à la chambre 18. Si ce point de pression dynamique nulle est dans la chambre 18, on retrouve la courbe a de la figure 8. Si ce point est sur le conduit 50, on retrouve le fonctionnement suivant la courbe c et enfin, si ce point est sur le conduit 51, on retrouve le fonctionnement selon la courbe b.

Lorsque le niveau d'excitation provenant de la route est très élevé, le mouvement relatif du moteur par rapport à la caisse provoque un écoulement de liquide entre les chambres 40 et 41, à travers les conduits 50 et 51. Cet écoulement produit des forces d'amortissement, les deux conduits en série 50 et 51 constituant un canal de grande longueur joignant les deux chambres.

Ce mode de réalisation présente, par rapport au mode de réalisation décrit en se référant aux figures 2, 3 et 4, les avantages suivants:

— le canal de grande longueur joignant les deux chambres est situé à l'extérieur du support élastique, si bien que sa longueur et son diamètre ne se trouvent pas limités par les caractéristiques géométriques du support,

— l'utilisation de deux conduits de liaison 50 et 51 permet d'utiliseur pour leur réalisation des tuyaux de plus faible diamètre qui sont plus faciles à former.

L'invention ne se limite pas aux modes de réalisation qui ont été décrits.

C'est ainsi qui, dans le cas où la seconde chambre de travail et la chambre d'expansion sont ménagées à l'intérieur d'un support élastique unique intercalé entre le moteur et le châssis, la paroi de séparation entre ces deux chambres, à l'intérieur du support, peut être réalisée sous une forme entièrement rigide, au lieu de présenter une partie déformable.

La chambre d'expansion peut être réalisée indépendamment du support élastique intercalé entre le moteur et la caisse et placée à un endroit quelconque du véhicule.

Dans le cas d'un mode de réalisation à deux conduits joignant la première chambre aux seconde et troisième chambres respectivement, on peut utiliser un tronçon commun entre la première chambre et un point de raccordement commun aux deux conduits.

Il est bien évident que le dispositif de suspension suivant l'invention s'applique à tout véhicule comportant, pour chacune de ses roues, un amortisseur télescopique intercalé entre la roue et la caisse. Le dispositif peut comporter un ensemble tel que décrit associé à chacune des roues, de manière totalement indépendante ou au contraire en association avec au moins un autre ensemble similaire.

**Revendications**

1. Dispositif de suspension de la caisse (1, 20) et du groupe motopropulseur (2, 22) d'un véhicule automobile comportant, associé à chaque roue (15) un amortisseur télescopique (14) relié d'une part à la caisse (1, 20) et d'autre part à la roue (15) et une première chambre à volume variable (5, 18) intercalée entre la caisse et la partie adjacente de l'amortisseur (3, 16), remplie d'un liquide incompressible et reliée hydrauliquement par un premier conduit (10) de longueur L1 et de section S1 et un deuxième conduit (11) de longueur L2 et de section S2 à une seconde chambre à volume variable (6, 40) ménagée dans un support élastique (24) intercalé entre le groupe motopropulseur (2, 22) et la caisse (1, 20) de façon à constituer une chambre de travail dont la paroi déformable (7, 30) subit des forces extérieures, caractérisé par le fait que la première (5, 18) et la seconde (6, 40) chambres sont reliées à une troisième chambre à volume variable (8, 41) constituant une simple chambre d'expansion dont la paroi déformable (9, 31) ne subit pas de forces extérieures, par l'intermédiaire d'un troisième conduit (12) de longueur L3 et de section S3 qui a un point de jonction P commun avec les premier et deuxième conduits et que deux au moins des trois conduits ont une longueur non nulle et que les deuxième et troisième conduits (11) et (12) constituent un canal (36) de longueur (L2+L3) importante par rapport au diamètre de sa section.

2. Dispositif de suspension suivant la revendication 1, caractérisé par le fait que le canal (36) de longueur (L2+L3) présente une longueur de 10 à 100 fois plus grande que le diamètre des sections S2 et S3 qui sont sensiblement identiques.

3. Dispositif de suspension suivant l'une quelconque des revendications 1 et 2, caractérisé par le quelconque des revendications 1 et 2, caractérisé par le fait que la seconde chambre (40) et la troisième chambre (41) sont ménagées l'une et l'autre à l'intérieur du support élastique (24) et séparées par une cloison (34, 35) au moins partiellement rigide.

4. Dispositif de suspension suivant la revendication 3, caractérisé par le fait que le canal de grande longueur (36) est ménagé à l'intérieur de la cloison de séparation (34, 35) et mis en communication par un passage (47) avec un embout (48) solidaire de l'armature (27) du support élastique (24) pour la liaison hydraulique des seconde et troisième chambres (40, 41) avec la première chambre (18), par l'intermédiaire d'un conduit (25) relié à son extrémité à l'embout (48).

5. Dispositif de suspension suivant l'une quelconque des revendications 1, 2 et 3, caractérisé par le fait que la première chambre (18) est reliée indépendamment à la seconde chambre (40), par un premier conduit (50) et à la troisième chambre (41) par un seconde conduit (51).

6. Dispositif de suspension suivant la revendication 3, caractérisé par le fait que la paroi de séparation entre la seconde chambre (40) et la troisième chambre (41), de forme circulaire, est constituée par deux disques (34, 35) rigides serrés l'un contre l'autre entre lesquels est intercalée, à leur partie centrale, une paroi mobile déformable (38) de forme circulaire.

7. Dispositif de suspension suivant la revendication 6, caractérisé par le fait qu'au moins un embout (48) est fixé sur le support élastique et que les disques (34, 35) comportent un dégagement en creux de direction radiale à leur périphérie pour leur engagement sur l'embout (48) permettant de réaliser la liaison hydraulique de cet embout avec les seconde et troisième chambres (40, 41) et le positionnement angulaire des disques (34, 35).

**Patentansprüche**

1. Aufhängungsvorrichtung für die Karosserie (1, 20) und die Antriebseinheit (2, 22) eines Kraftfahrzeugs mit einem jedem Rad (15) zugeordneten Teleskop-Schwingungsdämpfer (14), der einerseits mit der Karosserie (1, 20) und andererseits mit dem Rad (15) verbunden ist, und einer ersten Kammer (5, 18) mit veränderlichem Volumen, die zwischen die Karosserie und dem anliegenden Teil (3, 16) des Schwingungsdämpfers eingesetzt ist, mit einer nicht komprimierbaren Flüssigkeit gefüllt ist und hydraulisch über eine erste Leitung (10) mit der Länge L1 und dem Querschnitt S1 und eine zweite Leitung (11) mit der Länge L2 und dem Querschnitt S2 mit einer zweiten Kammer (6, 40) mit veränderlichem Volumen verbunden ist, die in einem zwischen die Antriebseinheit (2, 22) und die Karosserie (1, 20) eingesetzten elastischen Lager (24) vorgesehen ist, so daß sie eine Arbeitskammer bildet, deren verformbare Wand (7, 30) äußeren Kräften unterliegt, dadurch gekennzeichnet, daß die erste Kammer (5, 18) und die zweite Kammer (6, 40) mit einer dritten Kammer (8, 41) mit veränderlichem Volumen, die eine einfache Expansionskammer bildet, deren verformbare Wand (9, 31) keinen äußeren Kräften unterliegt, über eine dritte Leitung (12) mit der Länge L3 und dem Querschnitt S3 verbunden sind, die einen mit der ersten und der zweiten Leitung gemeinsamen Anschlußpunkt P hat, daß wenigstens zwei der drei Leitungen eine Länge von nicht Null haben und daß die zweite und die dritte Leitung (11) und (12) einen Kanal (36) mit einer im Verhältnis zum Durchmesser seines Querschnitts großer Länge (L2+L3) bilden.

2. Aufhängungsvorrichtung nach Anspruch 1, dadurch gekennzeichnet, daß der Kanal (36) mit der Länge (L2+L3) eine Länge besitzt, die das 10- bis 100-fache des Durchmessers der Querschnitte S2 und S3 beträgt, die im wesentlichen gleich sind.

3. Aufhängungsvorrichtung nach einem der Ansprüche 1 und 2, dadurch gekennzeichnet, daß die zweite Kammer (40) und die dritte Kammer (41) beide im Inneren des elastischen Lagers (24) vorgesehen sind und durch eine wenigstens teilweise starre Wand (34, 35) voneinander getrennt sind.

4. Aufhängungsvorrichtung nach Anspruch 3, dadurch gekennzeichnet, daß der Kanal (36) großer Länge im Inneren der Trennwand (34, 35) vorgesehen ist und durch einen Durchgang (47) mit einem an der Halterung (27) des elastischen Lagers (24) befestigten Nippel (48) für die hydraulische Verbindung der zweiten und der dritten Kammer (40, 41) über eine an ihrem Ende an dem Nippel (48) angeschlossene Leitung (25) mit der ersten Kammer (18) verbunden ist.

5. Aufhängungsvorrichtung nach einem der Ansprüche 1, 2 und 3, dadurch gekennzeichnet, daß die erste Kammer (18) unabhängig über eine erste Leitung (50) mit der zweiten Kammer (40) und über eine zweite Leitung (51) mit der dritten Kammer (41) verbunden ist.

6. Aufhängungsvorrichtung nach Anspruch 3, dadurch gekennzeichnet, daß die kreisförmige Trennwand zwischen der zweiten Kammer (40) und der dritten Kammer (41) aus zwei starren, gegeneinander gepreßten Scheiben (34, 35) besteht, zwischen die in ihrem mittleren Teil eine kreisförmige verformbare bewegliche Wand (38) eingesetzt ist.

7. Aufhängungsvorrichtung nach Anspruch 6, dadurch gekennzeichnet, daß wenigstens ein Nippel (48) an dem elastischen Lager befestigt ist und daß die Scheiben (34, 35) an ihrem Umfang eine radial gerichtet Ausnehmung besitzen, die die Herstellung der hydraulischen Verbindung des Nippels mit der zweiten und der dritten Kammer (40, 41) und die Winkelpositionierung der heiben (34, 35) gestattet.

## Claims

1. A device for the suspension of the body (1, 20) and the engine (2, 22) of a motor vehicle, comprising associated with each wheel (15) a telescopic shock absorber (14) connected on the one hand to the body (1, 20) and on the other to the wheel (15) and a first chamber (5, 18) of variable volume interposed between the body and the adjacent portion of the shock absorber (3, 16) and filled with an incompressible liquid and hydraulically connected via a first conduit (10) of length L1 and section S1 and a second conduit (11) of length L2 and section S2 to a second chamber (6, 40) of variable volume, with which a resilient support (24) is formed which is interposed between the engine (2, 22) and the body (1, 20), so as to form a working chamber whose deformable wall (7, 30) is subjected to external forces, characterized in that the first chamber (5, 18) and the second chamber (6, 40) are connected to a third chamber (8, 41) of variable volume, forming a simple expansion chamber whose deformable wall (9, 31) is not subjected to external forces, via a third conduit (12) of length L3 and of section S3 which has a common junction point P with the first and second conduits, and at least two of the three conduits have a non-zero length, the second conduit (11) and the third conduit (12) forming a channel (36) having a length (L2+L3) which is large in relation to the diameter of its section.

2. A suspension device according to claim 1, characterized in that the channel (36) of length (L2+L3) has a length 10 to 100 times greater than the diameter of the sections S2 and S3, which are substantially identical.

3. A suspension device according to either of claims 1 and 2, characterized in that the second chamber (40) and the third chamber (41) are both provided inside the resilient support (24) and are separated by an at least partially rigid partition (34, 35).

4. A suspension device according to claim 3, characterized in that the channel (36) of major length is provided inside the separating partition (34, 35) and communicates via a passage (47) with a spigot (48) connected to the armature (27) of the resilient support (24) for the hydraulic connection of the first chamber (40) and the third chamber (41) to the first chamber (18) via a conduit (25) connected at its end to the spigot (48).

5. A suspension device according to any of claims 1, 2 and 3 characterized in that the first chamber (18) is independently connected via a first conduit (50) to the second chamber (40) and via a second conduit (51) to the third chamber (41).

6. A suspension device according to claim 3, characterized in that the circular separating wall between the second chamber (40) and the third chamber (41) is formed by two rigid discs (34, 35) clamped against one another and having at their central portion a deformable circular movable wall (38) interposed therebetween.

7. A suspension device according to claim 8, characterized in that at least one spigot (48) is attached to the resilient support, and the discs (34, 35) comprise a hollow radially directed clearance at their periphery for their engagement with the spigot (48), allowing the hydraulic connection of said spigot to the second chamber (40) and the third chamber (41) and the angular positioning of the discs (34, 35).

## FIG.8

## FIG.1

FIG.2

FIG.3

FIG.4

FIG.5

FIG. 6

FIG.7